# EUROPEAN PATENT SPECIFICATION

(11) **EP 1 906 395 B1**
(45) Date of publication and mention of the grant of the patent: **03.06.2009**
(21) Application number: 07117157.3
(22) Date of filing: 25.09.2007
(51) Int. Cl.: G11B 7/09, G02B 7/04, G02B 13/00

(54) **Camera module**
Kameramodul
Module d'appareil photographique

(30) Priority: 28.09.2006 JP 2006265160
(43) Date of publication of application: 02.04.2008
(73) Proprietor: Mitsumi Electric Co., Ltd., Tama-Shi, Tokyo (JP)
(72) Inventor: Osaka, Tomohiko Mitsumi Electric Co., Ltd, Yamagata (JP); Ishizawa, Takashi Mitsumi Electric Co. Ltd., Yamagata (JP)
(74) Representative: Solf, Alexander

(56) References cited:
- EP-A- 1 775 615
- JP-A- 2004 280 031
- US-A1- 2006 203 627

## Description

### BACKGROUND OF THE INVENTION

### Field of the Invention

This invention relates to a camera module, and more specifically to a camera module that can be used in small-sized electronic apparatuses such as digital cameras, camera-equipped cellular phones and the like.

### Description of the Related Art

A camera module having a function of displacing a lens unit in a direction of an optical axis of the lens unit is used in relatively small-sized digital cameras, camera-equipped cellular phones and the like. This function is used for providing an autofocus function and/or zoom function and the like, and is achieved by an interaction between a magnetic field generated by an electrical current flowing in a coil and a magnetic field generated by a yoke and magnets provided on the yoke.

Such a camera module includes a barrel which holds the lens unit, a holder which houses the barrel therein, and a pair of leaf springs for supporting the holder so that the holder is displaceable in a direction of an optical axis of the lens unit.

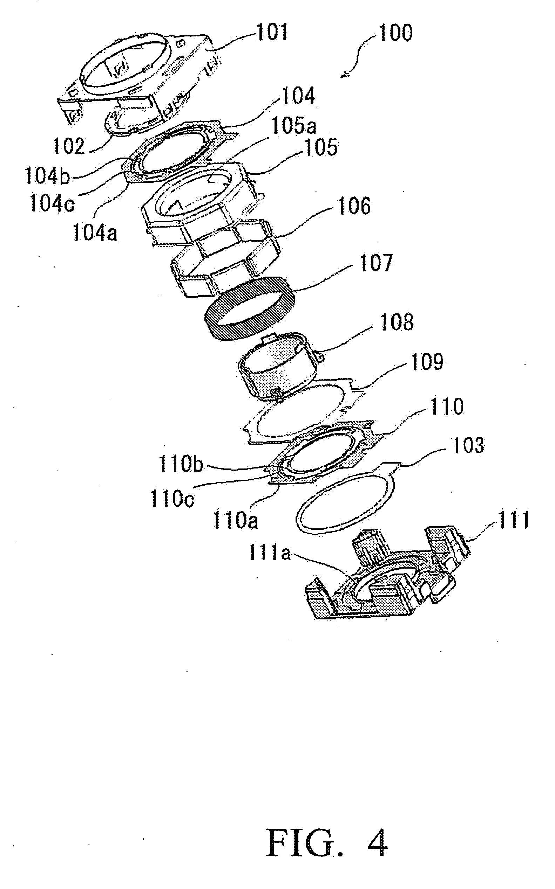

FIG. 4 is an exploded perspective view of an autofocus actuator assembly 100 used in a conventional camera module for displacing a lens unit (not shown) in a direction of an optical axis thereof. It is to be noted that an imaging element (not shown) is provided below a base 111 of the actuator assembly 100.

A holder 108 that houses a barrel (not shown) holding the lens unit is provided in a space between a cover 101 and the base 111 so that the holder 108 is displaceable in a direction of an optical axis of the lens unit together with the lens unit.

A ring-shaped inner annular portion 104b of an upper leaf spring 104 and a ring-shaped inner annular portion 110b of a lower leaf spring 110 are attached to the upper and lower cylindrical end portions of the holder 108, respectively, using an adhesive. Further, an outer annular portion 104a of the upper leaf spring 104 is attached to a top surface of a yoke 105 and an outer annular portion 110a of the lower leaf spring 110 is provided on a lower end of the yoke 105, respectively. Furthermore, on the upper surface of the inner annular portion 104b of the upper spring 104 which is attached to the upper cylindrical end portion of the holder 108, a stopper denoted by the reference numeral 102 is attached using an adhesive.

Three bridge portions 104c are coupled between the outer annular portion 104a and the inner annular portion 104b of the upper leaf spring 104. As is the same with the upper leaf spring 104, three bridge portions 110c are coupled between the outer annular portion 110a and the inner annular portion 110b of the upper leaf spring 110. By resilient deformation of the respective three bridge portions 104c and 110c, the holder 108 can be displaced in a direction of an optical axis of the lens unit.

A plurality of magnets 106 are provided on the yoke 105 so as to produce a magnetic field. The yoke 105 has an axial bore 105a for receiving the holder 108. Further, a coil 107 is provided around an outer periphery of the holder 108 so that the coil 7 is disposed in the magnetic field produced by the magnets 106 and the yoke 105 in a state that the holder 108 is received in the axial bore 105a. By supplying a current to the coil 107 to generate a magnetic field, the holder 108 can be displaced in a direction of an optical axis of the lens unit by a driving force generated by the interaction of the magnetic fields. In this regard, it is to be noted that a component donated by the reference numeral 109 in FIG. 4 is a ring-shaped metal plate provided between the lower leaf spring 110 and the lower end of the yoke 105. Further, a ring-shaped flexible printed circuit board 103 for supplying an electrical current to the coil 107 is provided below the outer annular portion 110a of the lower leaf spring 110.

When no electrical current is supplied to the coil 107, the holder 108 is biased toward the base 111 (downwardly in FIG. 4) by means of the upper leaf spring 104 and the lower leaf spring 110. Specifically, on the base 111, there are formed cylindrical protrusions (bosses) 113 so as to protrude toward the cover 101 (upwardly in FIG. 4). Therefore, the lower cylindrical end portion which is positioned on the side of the base 11 is supported on the base 111 with being pushed up toward the cover 101 (upwardly in FIG. 4) by the bosses 111a when no electrical current is supplied to the coil 107. That is, a predetermined back tension is applied to the holder 108 by means of the upper and lower leaf springs 104 and 110.

In a state that the lower cylindrical end portion of the holder 108 is being pushed up by the bosses 111a, the bridge portions 104c of the upper leaf spring 104 and the bridge portions 110c of the lower leaf spring 110 are deformed according to the amount of the displacement of the holder 108, and the holder 108 is biased toward the base 111 due to the restoring force (biasing force) of the deformed bridge portions 104c and 110c. When no electrical current is supplied to the coil 107, the holder 108 is supported on the base 111 due to the restoring force (biasing force) of the deformed bridge portions 104c and 110c.

The reason why the holder 108 is biased toward the base 111 by the upper leaf spring 104 and the lower leaf spring 110 when no electrical current is supplied to the coil 107 is to realize an optimum initial responsibility of the holder 108 when supply of an electrical current to the coil 107 is started to thereby make it possible to displace the holder 108 toward the cover 101 (upwardly in FIG. 4) smoothly.

It is to be noted that an actuator assembly similar to the actuator assembly 100 described above is disclosed in JP 2004-280031.

As described above, when no electrical current is supplied to the coil 107, the holder 108 is supported on the bosses 111a of the base 111 due to the restoring force (biasing force) of the deformed bridge portions 104c and 110c. However, there is a case that the biasing force of the deformed bridge portions 104c and 110c is larger or smaller than a predetermined biasing force due to poor assembly precision or variations in the spring characteristics of the bridge portions 104c and 110c. If the biasing force of the bridge portions 104c and 110c is larger than the predetermined biasing force, there is a problem in that the amount of the displacement of the holder 108 toward the cover 101 becomes smaller than the predetermined distance when a predetermined electrical current is supplied to the coil 107. On the other hand, if the biasing force of the bridge portions 104c and 110c is smaller than a predetermined biasing force, there is a problem in that the amount of the displacement of the holder 108 toward the cover 101 becomes larger than the predetermined distance when the predetermined electrical current is supplied to the coil 107. If the holder 108 cannot be stably displaced in response to the predetermined amount of the electrical current supplied to the coil 107, it becomes difficult to control the displacement of the holder 108 accurately and therefore it is not possible for the camera module to exhibit its predetermined performance.

### SUMMARY OF THE INVENTION

The present invention has been made in view of the problem described above, and therefore it is an object of the present invention to provide a camera module which can secure an accurate amount of displacement of a holder in response to a predetermined amount of an electrical current when the electrical current is supplied to a coil.

In order to achieve the object, the present invention is directed to a camera module, which comprises: a lens unit which constitutes an optical system of the camera module; a holder which houses the lens unit and is displaceable along an optical axis direction of the lens unit; a coil provided on the holder; a yoke and magnets provided on the yoke for providing a magnetic field to the coil; a leaf spring for supporting the holder so that the holder is displaceable along an optical axis direction of the lens unit; a base for supporting the holder when no electrical current is supplied to the coil; and an imaging element provided below the lens unit. In this camera module, the leaf spring biases the holder toward the base when no electrical current is supplied to the coil, the holder has a lower cylindrical end portion which is supported by the base, and the base has a support member which supports the lower cylindrical end portion of the holder and a protruding height adjusting means which is capable of adjusting a protruding height of the support member from the base.

According to the camera module of the present invention having the above structure, by adjusting the protruding height of the support member with respect to the base by using the protruding height adjusting means provided on the support member, it is possible to adjust the amount of the displacement of the holder. By adjusting the amount of the displacement of the holder in this way, it is possible to bias the holder toward the base with an appropriate biasing force even in the case where the biasing force of the deformed bridge portions is larger or smaller than a predetermined biasing force due to poor assembly precision or variations in the spring characteristics of the bridge portions. Therefore, the holder can be stably displaced in response to the amount of the electrical current supplied to the coil, so that it is possible to control the displacement of the holder accurately and therefore it is also possible for the camera module to exhibit its predetermined performance.

In the camera module of the present invention, it is preferred that the support member is a ring-shaped member having an outer periphery surface, the protruding height adjusting means includes a male thread formed on the outer periphery of the support member and a female thread formed on the base so as to be engageable with the male thread formed on the outer periphery of the support member.

According to this structure, since the adjustment of the protruding height of the support member with respect to the base can be carried out by merely rotating the support member in a state that the male thread of the support member is engaged with the female thread of the base, the adjustment can be carried out easily and quickly.

The above and other objects, features and advantages of the present invention will be apparent from the following description when taken in conjunction with the accompanying drawings which illustrate preferred embodiments of the present invention by way of example.

### BRIEF DESCRIPTION OF THE DRAWINGS

FIG. 1 is an exploded perspective view of an actuator assembly 1 of a camera module of an embodiment according to the present invention.

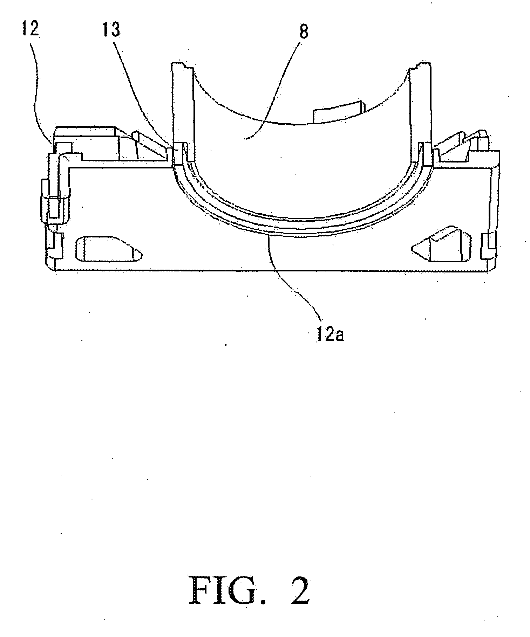

FIG. 2 is a perspective sectional view of a part of the actuator assembly 1 of the camera module shown in FIG. 1 and shows a positional relationship between a holder 8, a base 12 and a support member 13 of the actuator assembly 1.
FIG. 3 is a sectional view of a part of the actuator assembly 1 of the camera module shown in FIG. 1 and shows a positional relationship between the holder 8, the base 12 and the support member 13 of the actuator assembly 1.
FIG. 4 is an exploded perspective view of an actuator assembly 100 of a conventional camera module.

### DETAILED DESCRIPTION OF THE PREFERRED EMBODIMENTS

A camera module according to an embodiment of the present invention will be described below with reference to the accompanying drawing.

The camera module according to the embodiment comprises: a lens unit (not shown) which constitutes an optical system of the camera module; a holder 8 which houses the lens unit and is displaceable along an optical axis direction of the lens unit and has a cylindrical shape having upper and lower cylindrical end portions; a coil 7 provided on the holder 8; a yoke 5 and magnets 6 provided on the yoke 5 for providing a magnetic field to the coil 7; upper and lower leaf springs 4, 10 for supporting the holder 8 so that the holder 8 is displaceable along an optical axis direction of the lens unit; a base 12 for supporting the holder 8 when no electrical current is supplied to the coil 7; and an imaging element (not shown) provided below the lens unit. In this camera module, the upper and lower leaf springs 4, 10 bias the holder 8 toward the base 12 when no electrical current is supplied to the coil 7, the holder 8 has a lower cylindrical end portion 8a which is supported by the base 12, and the base 12 has a support member 13 which supports the lower cylindrical end portion 8a of the holder 8 and protruding height adjusting means in the form of a male thread 13a which is capable of adjusting a protruding height thereof from the base 12.

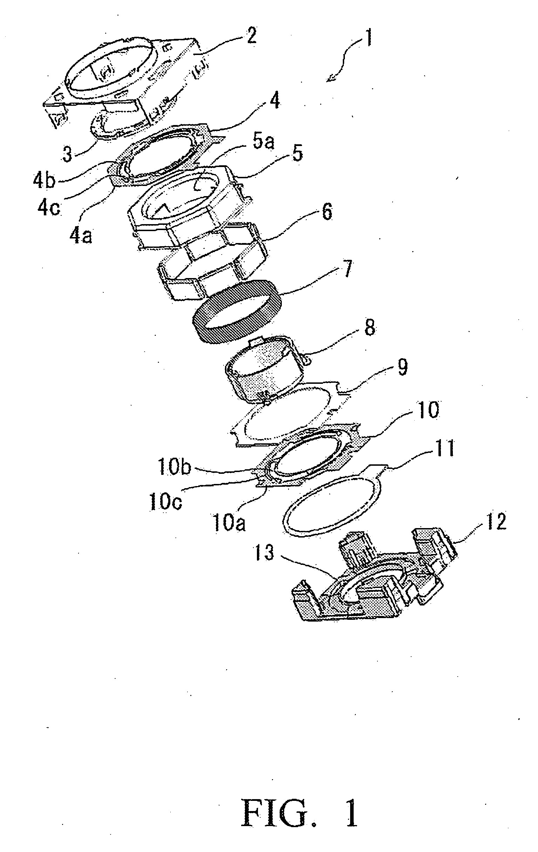

Hereinbelow, with reference to FIG. 1, description is made with regard to an actuator assembly 1 of the camera module of the embodiment according to the present invention. In this regard, it is to be noted that an imaging element (not shown in the drawing) is disposed below a base 12.

The holder 8 that houses the barrel (not shown) holding the lens unit is provided in a space defined between a cover 2 and the base 12 so that the holder 8 is displaceable in a direction of an optical axis of the lens unit.

The holder 8 is a cylindrical member made of a synthetic resin and the coil 7 is provided around the holder 8. An inner annular portion 4b of the upper leaf spring 4 is attached the upper cylindrical end portion 8a of the holder 8 and an inner annular portion 10b of the lower leaf spring 10 is attached to the lower cylindrical end portion of the holder 8, respectively. Further, the outer annular portion 4a of the upper leaf spring 4 is attached to a top surface of the yoke 5 provided on the base 12 and the outer annular portion 10a of the lower leaf spring 10 is attached to a lower end portion of the yoke 5 through an annular plate 19 (which will be described below in more detail). Furthermore, on the upper surface of the inner annular portion 4b of the upper spring 4 which is attached to the upper cylindrical end portion of the holder 8, a stopper 3 is attached using an adhesive. This stopper 3 is provided for restricting upwardly excessive displacement of the holder 8 by the abutment with the bottom surface of the cover 2 when the holder 8 is largely displaced.

Each of the upper and lower leaf springs 4, 10 is formed from a thin metal plate made of beryllium copper through a punching process, and has the ring-shaped outer annular portion 4a, 10a and the ring-shaped inner annular portion 4b, 10b which is concentrically provided inside the outer annular portion 4a, 10a through an annular spacing. The inner annular portion 4b, 10b is displaceably supported by the outer annular portion 4a, 10a through the bridge portions 4c, 10c. Each of the bridge portions 4c, 10c has an elongated arc-shape which extends along the inner periphery of the outer annular portion 4a, 10a and the outer periphery of the inner annular portion 4b, 10b through a predetermined angle. By resilient deformation of the respective three bridge portions 4c and 10c, the holder 8 can be displaced in a direction of an optical axis of the lens unit.

The plurality of magnets 6 are bonded to the inner surface of the yoke 5 so as to produce a magnetic field. Further, the coil 7 is provided around an outer periphery of the holder 8 so that the coil 7 is disposed in the magnetic field generated by the magnets 6 and the yoke 5. The yoke 7 has an axial bore 5a for receiving the holder 8. The holder 8 can be displaced through the axial bore 5a in a direction of an optical axis of the lens unit by supplying an electrical current to the coil 7, Further, the annular plate 9 made of a magnetic metal material is provided between the lower leaf spring 10 and the bottom surface of the yoke 5 for reducing leakage of magnetic fluxes from the magnets 6. Furthermore, the component denoted by the reference numeral 12 is a flexible printed circuit board for supplying an electrical current to the coil 7.

The base 12 is a molded member made of a synthetic resin, and a circular opening 12a is formed in the center portion thereof.

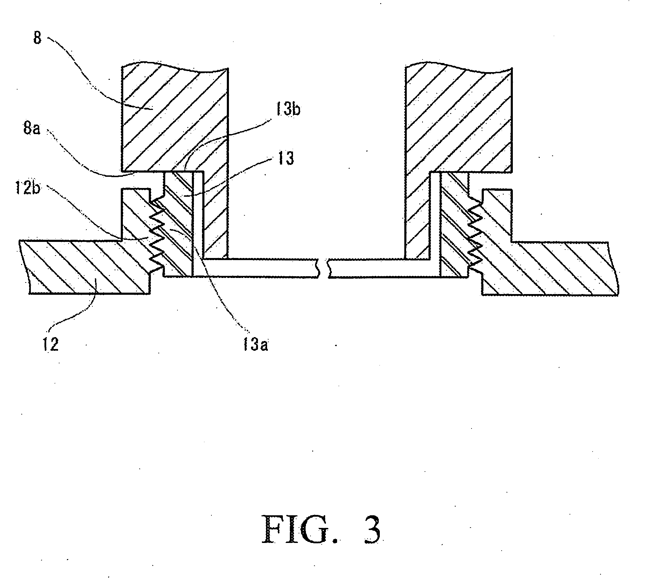

FIG. 3 shows a positional relationship between the holder 8, the base 12 and the support member 13 in a state that no electrical current is supplied to the coil 7 . As shown in FIG. 3, an upper end part 13b of the support member 13 supports the lower cylindrical end portion 8a of the holder 8 so as to push up it upwardly . Namely, in the state shown in FIG. 3, the bridge portions 4c of the upper leaf spring 4 and the bridge portions 10c of the lower leaf spring 10 are deformed in accordance with the amount of the displacement of the holder 8 which is pushed up by the support member 13, so that the holder 8 is biased toward the base 12 by the restoring force (biasing force) of the deformed bridge portions 4c and 10c. When no electrical current is supplied to the coil 7, the holder 8 is biased toward the base 12 due to the biasing force of the deformed bridge portions 4c and 10c, so that the holder 8 is supported on and pushed against the upper end 13a of the support member 13. The reason why the holder 8 is biased toward the base 12 by the upper leaf spring 4 and the lower leaf spring 10 when no electrical current is supplied to the coil 7 is to realize an optimum initial responsibility of the holder 8 when supply of an electrical current to the coil 7 is started to thereby make it possible to displace the holder 8 toward the cover 2 (upwardly in FIG. 1) smoothly,

As described above, a male thread 13a is formed on an outer peripheral surface of the support member 13. On the other hand, on the inner peripheral surface of the opening 12a of the base, there is formed a female thread 12b so as to be engageable with the male thread 13a of the support member 13. The male thread 13a of the support member 13 and the female thread 12b of the base 12 constitute the protruding height adjustable means of the present invention. With this structure, by rotating the support member 13 in a state that the male thread 13a is engaged with the female thread 12a of the base 12, the protruding height of the support member from the base 12 can be freely adjusted. By constructing the support member 13 so that the protruding height of the support member 12 from the base 12 can be adjusted in this way, it is possible to adjust an amount of displacement of the holder 8 which is pushed up by the support member 13 even in the case where no electrical current is supplied to the coil 7. In this regard, it is to be noted that it is preferred that, after the amount of the displacement of the holder 8 has been adjusted by rotating the support member 13 with respect to the base 12, portions of the support member 13 are bonded to the base 12 so that they cannot be rotated further.

According to the camera module of the present invention having the above structure, by adjusting the threading amount of the male thread 13a of the support member 13 which supports the lower cylindrical end portion 8a of the holder 8 with respect to the female thread 12b of the base 12, it is possible to adjust the protruding height of the support member 13 from the base, and therefore it is possible to adjust the amount of the displacement of the holder 8 . By adjusting the amount of the displacement of the holder 8, it is possible to bias the holder 8 toward the base 12 with an appropriate biasing force even in the case where the biasing force of the deformed bridge portions 4c and 10c is larger or smaller than a predetermined biasing force due to poor assembly precision or variations in the spring characteristics of the bridge portions 4c and 10c. Therefore, the holder 8 can be stably displaced in response to the amount of the electrical current supplied to the coil 7, so that it is possible to control the displacement of the holder 8 accurately and therefore it is also possible for the camera module to exhibit its predetermined performance.

Further, since the adjustment of the protruding height of the support member 13 with respect to the base 12 can be carried out by merely rotating the support member 13 in a state that the male thread 13a of the support member 13 is engaged with the female thread 12a of the base 12 the adjustment can be carried out easily and quickly.

Finally, it should be understood that the present invention is not limited to the preferred embodiments described hereinabove and, needless to say, a variety of modifications or variations may be made without departing from the scope of the invention defined in the following claims.

Further, it is also to be understood that the present disclosure relates to subject matter contained in JP 2008-083541.

## Claims

1. A camera module, comprising:
a lens unit which constitutes an optical system of the camera module;
a holder (8) which houses the lens unit and is displaceable along an optical axis direction of the lens unit;
a coil (7) provided on the holder;
a yoke (5) and magnets (6) provided on the yoke for providing a magnetic field to the coil;
a leaf spring (4, 10) for supporting the holder so that the holder is displaceable along an optical axis direction of the lens unit;
a base (12) for supporting the holder when no electrical current is supplied to the coil; and
an imaging element provided below the lens unit,
wherein the leaf spring biases the holder toward the base when no electrical current is supplied to the coil, the holder has a lower cylindrical end portion which is supported by the base, and the base has a support member which supports the lower cylindrical end portion of the holder and a protruding height adjusting means which is capable of adjusting a protruding height of the support member from the base.

2. The camera module as claimed in claim 1, wherein the support member is a ring-shaped member having an outer periphery surface, the protruding height adjusting means includes a male thread formed on the outer periphery of the support member and a female thread formed on the base so as to be engageable with the male thread formed on the outer periphery of the support member.

## Patentansprüche

1. Ein Kameramodul, das folgendes einschließt:
eine Linseneinheit, die ein optisches System des Kameramoduls aufbaut;
einen Halter (8), der die Linseneinheit einhaust und entlang einer optischen Achsenrichtung der Linseneinheit verschiebbar ist;
eine auf dem Halter vorgesehene Spule (7);
ein Joch (5) und Magnete (6), die auf dem Joch zur Bereitstellung eines Magnetfeldes für die Spule vorgesehen sind;
eine Blattfeder (4, 10) zum Stützen des Halters, so dass der Halter entlang einer optischen Achsenrichtung der Linseneinheit verschiebbar ist;
eine Basis (12) zum Stützen des Halters, wenn der Spule kein elektrischer Strom zugeführt wird; und
ein unterhalb der Linseneinheit bereitgestelltes bildgebendes Element,
wobei die Blattfeder den Halter in Richtung der Basis spannt, wenn der Spule kein elektrischer Strom zugeführt wird, der Halter einen unteren zylindrischen Endteil aufweist, der von der Basis getragen wird, und die Basis ein Trägerelement aufweist, das den unteren zylindrischen Endteil des Halters trägt, und ein emporragendes Höheneinstellmittel, das in der Lage ist, eine von der Basis emporragende Höhe des Trägerelements einzustellen.

2. Das Kameramodul nach Anspruch 1, wobei das Trägerelement ein ringförmiges Element mit einer äußeren Umfangsfläche ist, wobei das emporragende Höheneinstellmittel ein auf der äußeren Umfangsfläche des Trägerelements ausgebildetes männliches Gewinde und ein auf der Basis ausgebildetes weibliches Gewinde einschließt, so dass es mit dem auf der äußeren Umfangsfläche des Trägerelements ausgebildeten männlichen Gewinde eingreifbar ist.

## Revendications

1. Module d'appareil photographique, comprenant :
une unité d'objectif qui constitue un système optique du module d'appareil photographique ;
un support (8) qui loge l'unité d'objectif et est déplaçable le long d'une direction d'axe optique de l'unité d'objectif;
une bobine (7) prévue sur le support,
une culasse (5) et des aimants (6) prévus sur la culasse pour fournir un champ magnétique à la bobine ;
un ressort à lames (4, 10) pour supporter le support de sorte que le support puisse se déplacer le long d'une direction d'axe optique de l'unité d'objectif ;
une base (12) pour supporter le support lorsqu'aucun courant électrique n'est fourni à la bobine ; et
un élément de formation d'image prévu en dessous de l'unité d'objectif,
dans lequel le ressort à lames amène le support vers la base lorsqu'aucun courant électrique n'est fourni à la bobine, le support a une partie d'extrémité cylindrique inférieure qui est supportée par la base, et la base a un élément de support qui supporte la partie d'extrémité cylindrique inférieure du support et des moyens d'ajustement de hauteur en saillie qui sont capables d'ajuster une hauteur en saillie de l'élément de support par rapport à la base.

2. Module d'appareil photographique selon la revendication 1, dans lequel l'élément de support est un élément de support de forme annulaire ayant une surface périphérique externe, les moyens d'ajustement de hauteur en saillie comprennent un filetage mâle formé sur la périphérie externe de l'élément de support et un filetage femelle formé sur la base de sorte à se mettre en prise avec le filetage mâle formé sur la périphérie externe de l'élément de support.
